# EUROPÄISCHE PATENTSCHRIFT

(11) **EP 3 756 924 B1**
(45) Veröffentlichungstag und Bekanntmachung des Hinweises auf die Patenterteilung: **11.05.2022**
(21) Anmeldenummer: 20164596.7
(22) Anmeldetag: 20.03.2020
(51) Int. Cl.: B60K 35/00

(54) **KOMBIINSTRUMENT EINES KRAFTFAHRZEUGS**
COMBINED TOOL OF A MOTOR VEHICLE
INSTUMENT COMBINÉ D'UN VÉHICULE AUTOMOBILE

(30) Priorität: 25.06.2019 DE 102019117033
(43) Veröffentlichungstag der Anmeldung: 30.12.2020
(73) Patentinhaber: Marelli Stuttgart (Germany) GmbH, 70563 Stuttgart (DE)
(72) Erfinder: PEIL, Alexander, 70563 Stuttgart (DE); GAMMOUNE, Mohamed, 70563 Stuttgart (DE); KUBOWSKI, Harald, 70563 Stuttgart (DE)
(74) Vertreter: Wörz, Volker Alfred

(56) Entgegenhaltungen:
- EP-A1- 3 045 342
- DE-A1-102013 008 649
- DE-A1-102013 019 565
- DE-A1-102016 108 659
- US-A1- 2013 002 414

## Beschreibung

Die vorliegende Erfindung betrifft ein Kombiinstrument eines Kraftfahrzeugs. Das Kombiinstrument ist zur Montage im Inneren des Kraftfahrzeugs im Sichtbereich des Fahrers im Armaturenbrett vorgesehen. Es umfasst mindestens eine analoge oder digitale Anzeigeeinrichtung zur Anzeige von betriebs- und/oder verkehrsbezogenen Informationen betreffend das Kraftfahrzeug bzw. sein Umfeld. Ferner umfasst das Kombiinstrument mehrere neben- oder übereinander angeordnete Kontrollleuchten.

Derartige Kombiinstrumente sind in unterschiedlichen Ausführungsformen aus dem Stand der Technik bekannt. Während früher hauptsächlich analoge Anzeigeeinrichtungen mit einem elektrischen Zeigerinstrument Verwendung fanden, das mindestens einen durch einen Elektromotor angetriebenen Zeiger umfasst, werden in neuerer Zeit zunehmend digitale Anzeigeeinrichtungen eingesetzt, die mindestens einen Bildschirm aufweisen, auf dem ein Bild eines analogen Zeigerinstruments und/oder eine digitale Anzeige darstellbar ist. Während früher die Kontrollleuchten in der Regel kleine Glühbirnen als Lichtquellen aufwiesen, werden in neuerer Zeit zunehmend Kontrollleuchten mit Leuchtdioden (LEDs) als Lichtquellen eingesetzt. Im Strahlengang des von den Lichtquellen emittierten Lichts sind lichtdurchlässige, häufig eingefärbte und mit einem Symbol oder Piktogramm versehene Abdeckungen angeordnet, welche den für den Fahrer des Kraftfahrzeugs sichtbaren Teil der Kontrollleuchten bilden. Sowohl Glühbirnen als auch LEDs benötigen geeignete Optiken in Form von Reflektoren und/oder Linsen, um das von den Lichtquellen ausgesandte Licht zu bündeln, in Richtung der Abdeckungen zu lenken und die Abdeckungen vollständig und möglichst homogen auszuleuchten. Glühbirnen und LEDs von Kontrollleuchten sind vorzugsweise über eine Leiterplatte elektrisch kontaktiert, und sind auf dieser häufig auch mechanisch befestigt. Das schränkt bei den bekannten Kontrollleuchten mit Glühbirnen oder LEDs die Möglichkeiten zur Positionierung der Leiterplatte im Inneren des Kombiinstruments stark ein. Bei Verwendung von LEDs als Lichtquellen benötigen die Kontrollleuchten zudem eine relativ aufwendige Ansteuerschaltung.

DE 10 2013 019 565 A1 offenbart ein Kombiinstrument, das für ein Kraftfahrzeug vorgesehen ist und einen Anzeigebereich mit mehreren ersten Anzeigeelementen sowie eine Führungsbahn für mindestens ein zweites Anzeigeelement aufweist, wobei die ersten Anzeigeelemente in dem Anzeigebereich nebeneinander ortsfest angeordnet sind, wobei die Führungsbahn für das mindestens eine zweite Anzeigeelement bei frontaler Draufsicht auf den Anzeigebereich zumindest abschnittsweise vor den nebeneinander angeordneten ersten Anzeigeelementen angeordnet ist, und wobei das mindestens eine zweite Anzeigeelement entlang der Führungsbahn zu verschieben ist.

EP3045342 A1 offenbart ein Kombiinstrument mit mindestens eine Hauptanzeige, eine konfigurierbare Digitalanzeige, die neben der Hauptanzeige angeordnet ist, ein Verkleidungselement, das die mindestens eine Hauptanzeige im Wesentlichen umgibt und über einem Teil der konfigurierbaren Digitalanzeige angeordnet ist, und mindestens eine Hilfsanzeige, die innerhalb des Verkleidungselements angeordnet ist.

Das Verkleidungselement kann einen undurchsichtigen Teil und einen durchsichtigen Teil umfassen. Die mindestens eine Hilfsanzeige kann innerhalb des transparenten Abschnitts angeordnet werden.

DE 10 2016 108 659 A1 offenbart ein Kombiinstrument mit einer durchgehenden LED-Balkenanzeige. Das Kombiinstrument schließt Folgendes ein: eine Basis, LED-Lichtquellen, die an der Basis platziert sind, LED-Kompartimente, die sich daraus ergeben, dass eine Befestigungsplatte die Vielzahl von LED-Leuchten voneinander trennt, einen Aufsatz, der die oberen Flächen der LED-Kompartimente abdeckt, wobei die obere Fläche des Aufsatzes von einem Benutzer wahrgenommen wird und die untere Fläche des Aufsatzes die LED-Kompartimente von innen abdeckt. Die Befestigungsplatte ist auf eine Weise konzipiert, dass die Innenwände darauffolgender LED-Kompartimente einen vorher festgelegten Abstand zu der unteren Fläche des Aufsatzes beibehalten, damit das Licht zu dem angrenzenden LED-Kompartiment weitergeleitet werden kann.

US 2013 002 414 A1 offenbart ein Kombiinstrument für Fahrzeuge umfasst im Wesentlichen ein Kombiinstrumentgehäuse, eine Instrumentenanzeige, eine Linse und eine Lichtquelle. Die Linse ist vor der Instrumentenanzeige angeordnet und umfasst einen reflektierenden Bereich. Die Lichtquelle ist auf dem Gehäuse des Kombiinstruments oder in der Nähe des Gehäuses des Kombiinstruments angebracht. Die Lichtquelle ist so konfiguriert, dass sie selektiv Licht in Richtung des reflektierenden Bereichs der Linse emittiert, um selektiv Warninformationen auf dem reflektierenden Bereich bereitzustellen.

DE 10 2013 008 649 offenbart ein Kombinationsinstrument für ein Kraftfahrzeug, umfassend ein rahmenartiges Gehäuseteil mit einer darin angeordneten Anzeigefläche, wobei in dem Gehäuseteil und/oder zwischen der Anzeigefläche und dem Gehäuseteil wenigstens eine Öffnung gebildet ist, sowie wenigstens eine der Anzeigefläche zugeordnete Leuchteinrichtung, über welche eine Nichtsichtseite der Anzeigefläche zumindest abschnittsweise beleuchtbar ist, weiter umfassend wenigstens ein Abdeckelement, welches derart angeordnet ist, dass das von der Leuchteinrichtung zur Beleuchtung der Anzeigefläche emittierte Licht nicht durch die Öffnung treten kann.

Zusammenfassend bestehen die Kontrollleuchten der bekannten Kombiinstrumente aus einer Vielzahl von Teilen (Leiterplatte, Lichtquelle, Optik, Abdeckung), benötigen relativ viel Bauraum in dem Kombiinstrument, sind aufwendig und teuer in der Herstellung, und die Leiterplatte mit der daran befestigten Lichtquelle kann nicht frei im Inneren des Kombiinstruments positioniert werden. Ausgehend von dem beschriebenen Stand der Technik liegt der vorliegenden Erfindung deshalb die Aufgabe zugrunde, die bekannten Kombiinstrumente dahingehend auszugestalten und weiterzubilden, dass sie einfacher und kostengünstiger im Aufbau und in der Herstellung sind.

Zur Lösung dieser Aufgabe wird ausgehend von dem Kombiinstrument der eingangs genannten Art vorgeschlagen, dass die neben- oder übereinander angeordneten Kontrollleuchten durch einen einzigen OLED-Streifen gebildet sind, wobei der OLED-Streifen in mehrere separat ansteuerbare Leuchtsegmente unterteilt ist, wobei jedes Leuchtsegment eine Kontrollleuchte bildet.

OLED ist die Abkürzung für "organic light-emitting diode". OLEDs sind flächige selbstleuchtende Halbleiterbauteile. OLEDs haben eine einfache und flache Struktur mit einem oder mehreren organischen Filmen zwischen zwei Elektroden. Die typische Dicke der organischen Filme beträgt etwa 100 bis 200 nm. Dabei werden in der Regel zwei Arten organischer Materialien eingesetzt: langkettige Polymere oder kleine Moleküle. Beim Anlegen einer Spannung von bspw. zwischen 3 und 12 V werden Elektronen aus der Kathode in den organischen Film injiziert. Gleichzeitig werden Löcher (positive Ladungen) von einer transparenten Anode mit hoher Austrittsarbeit in das organische Material injiziert. Im elektrischen Feld wandern positive und negative Ladungen durch den organischen Film. Bei ihrer Rekombination bilden sie angeregte Zustände. Zerfallen diese, werden Photonen ausgesendet und Licht tritt aus.

Die Lochleitungsschicht wird auf eine transparente Anode (z.B. ITO, Indium-Tin-Oxide = Indium-Zinn-Oxid) aufgebraucht, welche sich auf einer transparenten Schicht, bspw. einem Glas oder einer flexiblen Kunststofffolie, befindet. Darüber befindet sich eine zweite organische Schicht, in welche die Kathode Elektronen injiziert.

Die Kathode besteht aus Metallen, wie bspw. Barium oder Kalzium. Die letzte Ebene ist wieder eine Schicht aus transparentem Material, z.B. Glas oder einer Folie. Eine als transparente Schicht dienende Folie ist bspw. aus Kunststoff gefertigt. Da das Kathodenmaterial mit Wasser oder Sauerstoff reagiert (korrodiert), muss die komplette Einheit abgedichtet werden.

Die Dicke eines OLED-Moduls wird maßgeblich durch die Dicke der transparenten Schichten bestimmt und beträgt bei dem hier vorzugsweise zum Einsatz kommenden OLED-Streifen nur wenige Millimeter, vorzugsweise weniger als 1 mm. Zwei OLED-Techniken sind etabliert: Eine basiert auf kleinen Molekülen (small molecules), die in mehreren Schichten zwischen einer Anode und Kathode im Vakuum thermisch aufgedampft werden. Die andere ist vom Prinzip her ähnlich, der Aufbau jedoch einfacher. Hier sind nur zwei Schichten erforderlich, die aus verschiedenen langkettigen Polymeren bestehen. Die Polymere werden aus einer Lösung verarbeitet und entweder aufgedruckt oder über ein sogenanntes spin-coating-Verfahren aufgebracht.

Durch die Realisierung der Kontrollleuchten mittels OLEDs ergeben sich eine ganze Reihe von Vorteilen. Zum einen kann ein Großteil der für bisherige Kontrollleuchten erforderlichen Bauteile entfallen, insbesondere die separate Leiterplatte zur mechanischen Befestigung und elektrischen Kontaktierung der Lichtquellen, die Optiken zur Bündelung und Verteilung des von den Lichtquellen emittierten Lichts sowie die transparenten Abdeckungen, die durch das Licht der Lichtquellen ausgeleuchtet werden. Dadurch ergibt sich ein erheblicher Kostenvorteil und die Montage der Kontrollleuchten bzw. des gesamten Kombiinstruments wird deutlich vereinfacht. Bei der Realisierung der Kontrollleuchten durch die OLEDs wird zudem erheblich Bauraum eingespart, da die OLEDs sowohl die Lichtquellen als auch die für den Fahrer sichtbaren Abdeckungen bilden, zusätzliche Optiken sind nicht erforderlich. Ferner sind OLEDs einfach und kostengünstig in der Montage und können flexibel in dem Kombiinstrument montiert werden. Das hängt insbesondere damit zusammen, dass OLEDs nicht auf einer Leiterplatte befestigt werden müssen. Vielmehr wird der OLED-Streifen an einem geeigneten Trägerbereich im Kombiinstrument befestigt und kann über ein flexibles Kabel an einer beliebigen Stelle im Kombiinstrument kontaktiert werden. Denkbar ist bspw. eine Kontaktierung des OLED-Streifens über eine für andere Zwecke im Kombiinstrument vorgesehene Leiterplatte, bspw. über eine Leiterplatte eines Elektromotors zur Bewegung eines Zeigers einer analogen Anzeigeeinrichtung des Kombiinstruments.

Dadurch, dass mehrere neben- oder übereinander oder versetzt zueinander angeordnete Kontrollleuchten durch einen einzigen OLED-Streifen gebildet sind, ergibt sich eine weitere Reduzierung des Teileaufwands und Vereinfachung und Vergünstigung des Montageaufwands. Jede Kontrollleuchte wird auf einfache Weise durch ein separat ansteuerbares Leuchtsegment des OLED-Streifens gebildet. Aufgrund der Flexibilität der OLEDs können diese auch gebogen oder gewölbt in dem Kombiinstrument angeordnet werden, sodass selbst nicht in einer Ebene angeordnete Kontrollleuchten bzw. deren Abdeckungen durch einen einzigen OLED-Streifen realisiert werden können.

Die Kontrollleuchten können an einer beliebigen Stelle auf der dem Fahrer des Kraftfahrzeugs zugewandten Anzeigeseite angeordnet sein. In einer bevorzugten Ausführungsform sind die Kontrollleuchten am Rand des Kombiinstruments oberhalb, unterhalb der seitlich neben der mindestens einen analogen oder digitalen Anzeigeeinrichtung angeordnet. Alternativ oder zusätzlich wäre es auch denkbar, dass die Kontrollleuchten in die Anzeigefläche einer analogen Anzeigeeinrichtung integriert sind.

Gemäß einer vorteilhaften Weiterbildung der Erfindung wird vorgeschlagen, dass die Kontrollleuchten zur Anzeige eines Betriebszustands des Kraftfahrzeugs (sog. Kraftfahrzeugzustands-Tell-Tales) und/oder einer Gefahrensituation des Kraftfahrzeugs (sog. Sicherheits-Tell-Tales) dient. Der durch die Kontrollleuchten angezeigte Betriebszustand des Kraftfahrzeugs umfasst vorzugsweise ein eingeschaltetes Abblendlicht, ein eingeschaltetes Fernlicht, einen eingeschalteten Nebelscheinwerfer, ein eingeschaltetes Nebelschlusslicht, einen eingeschalteten Fahrtrichtungsanzeiger, ein ausgeschaltetes Fahrdynamiksystem, einen nicht angelegten Sicherheitsgurt, einen abgeschalteten Beifahrerairbag und/oder einen eingeschalteten Abstandsregelungstempomat. Die durch die Kontrollleuchten angezeigte Gefahrensituation des Kraftfahrzeugs umfasst vorzugsweise eine zu hohe Kühlwassertemperatur, einen zu niedrigen Füllstand des Kraftstoffs, des Öls, des Kühlwassers, der Bremsflüssigkeit und/oder der Scheibenreinigungsflüssigkeit, durchdrehende Antriebsräder, ein aktuell eingreifendes oder ausgefallenes Antiblockiersystem, eine aktuell eingreifende oder ausgefallene Fahrdynamikregelung, einen ausgefallenen Abstandsregelungstempomat, eine ausgefallene adaptive Scheinwerfersteuerung, eine ausgefallene Servounterstützung für Bremsen oder Lenkung, einen nicht angelegten Sicherheitsgurt, eine geöffnete Türe und/oder einen zu niedrigen Reifenluftdruck.

Gemäß einer vorteilhaften Ausführungsform der Erfindung wird vorgeschlagen, dass der OLED-Streifen als eine im unmontierten Zustand flexible OLED-Folie ausgebildet ist. Dabei sind die transparenten Schichten des OLED-Streifens bspw. aus einer flexiblen Kunststoff- oder Metallfolie gebildet. Vorteilhafterweise ist die OLED-Folie derart auf einem Trägerbereich im Inneren des Kombiinstruments befestigt, dass die aktivierten Leuchtsegmente für den Fahrer des Kraftfahrzeugs sichtbares Licht abstrahlen. Zur Realisierung der Kontrollleuchten muss also lediglich die OLED-Folie auf einem vorzugsweise flächigen Trägerbereich im Inneren des Kombiinstruments aufgebracht und befestigt werden, bspw. mittels Kleben, und die OLED-Folie dann elektrisch kontaktiert werden. Andere Möglichkeiten der Befestigung der Folie auf dem Trägerbereich sind ebenfalls denkbar, bspw. mittels Klemmen, Einspannen, Schweißen, insbesondere Laserschweißen, o.ä. Der Aufbau des Kombiinstruments ist ganz besonders einfach und kostengünstig, wenn der Trägerbereich in der gleichen Ebene liegt wie eine Anzeigefläche der analogen oder digitalen Anzeigeeinrichtungen bzw. sogar durch die Anzeigefläche gebildet wird. Denkbar wäre es auch, dass in der Anzeigefläche oder in einer im Sichtbereich des Fahrers liegenden vorderen Wand des Kombiinstruments eine Vertiefung zur Aufnahme des OLED-Streifens der Kontrollleuchte ausgebildet ist.

Eine weitere Vereinfachung der Kontrollleuchten des erfindungsgemäßen Kombiinstruments lässt sich dadurch erzielen, dass jedes der Leuchtsegmente des OLED-Streifen nur als ganzes ansteuerbar ist und zu einem bestimmten Zeitpunkt jeweils nur in einer einzigen Farbe leuchtet. Es ist also nicht beabsichtigt, in jedem der Leuchtsegmente durch gezielte Ansteuerung verschiedener Bereiche des Leuchtsegments gleichzeitig unterschiedliche Farben zu erzeugen, bspw. um sich ändernde Symbole oder Piktogramme oder gar bewegte Bilder in dem Leuchtsegment darzustellen. Vielmehr können die Leuchtsegmente vorzugsweise nur als Ganzes angesteuert werden, so dass sie als Ganzes Licht einer bestimmten Farbe aussenden. Durch unterschiedliche Ansteuerung ist es jedoch sehr wohl möglich, dass ein Leuchtsegment als Ganzes zu verschiedenen Zeitpunkten in mindestens zwei unterschiedlichen Farben leuchtet. Diese Ausführungsform hat den Vorteil, dass ein Sicherheits-Tell-Tale bspw. beim ersten Auftreten eines Fehlers zunächst gelb leuchten kann, wenn der Fehler nicht innerhalb einer vorgegebenen Zeit beseitigt oder behoben ist, orange leuchtet, und wenn der Fehler nach einer weiteren Zeitdauer immer noch nicht beseitigt oder behoben ist, schließlich rot leuchtet. Dabei leuchtet das Leuchtsegment zu einem bestimmten Zeitpunkt immer als Ganzes in der entsprechenden Farbe (gelb, orange oder rot).

Gemäß einer anderen vorteilhaften Weiterbildung der Erfindung wird vorgeschlagen, dass mindestens eines der Leuchtsegmente ein Symbol oder Piktogramm aufweist, das bei aktiviertem Leuchtsegment nicht leuchtet, wobei der restliche Bereich des Leuchtsegments außerhalb des Symbols oder Piktogramms bei aktiviertem Leuchtsegment leuchtet. Das bei aktiviertem Leuchtsegment nicht leuchtende Symbol oder Piktogramm kann bspw. aus dem OLED-Streifen oder aus einem oder mehreren der Schichten des OLED-Streifens im Bereich des entsprechenden Leuchtsegments herausgestanzt sein. Alternativ wäre es aber auch denkbar, das Leuchtsegment derart auszugestalten, dass verschiedene Bereiche des Leuchtsegments zu einem bestimmten Zeitpunkt unterschiedlich angesteuert werden können. Die könnte eine Ansteuerung des Leuchtsegments ermöglichen, bei der nur der Bereich des Leuchtsegments außerhalb des Symbols oder Piktogramms leuchtet.

Alternativ wäre es auch denkbar, dass mindestens eines der Leuchtsegmente ein Symbol oder Piktogramm aufweist, das bei aktiviertem Leuchtsegment leuchtet, wobei der restliche Bereich des Leuchtsegments außerhalb des Symbols oder Piktogramms bei aktiviertem Leuchtsegment nicht leuchtet. Der Bereich des Leuchtsegments, der das bei aktiviertem Leuchtsegment leuchtende Symbol oder Piktogramm umgibt, kann bspw. aus dem OLED-Streifen oder aus einem oder mehreren der Schichten des OLED-Streifens im Bereich des entsprechenden Leuchtsegments herausgestanzt sein. Alternativ wäre es aber auch denkbar, das Leuchtsegment derart auszugestalten, dass verschiedene Bereiche des Leuchtsegments zu einem bestimmten Zeitpunkt unterschiedlich angesteuert werden können. Die könnte eine Ansteuerung des Leuchtsegments ermöglichen, bei der nur der Bereich des Symbols oder Piktogramms des Leuchtsegments leuchtet.

Ferner wird vorgeschlagen, dass das Kombiinstrument eine analoge Anzeigeeinrichtung mit einem elektrischen Zeigerinstrument umfasst, das mindestens einen durch einen Elektromotor (z.B. einen Schrittmotor) angetriebenen Zeiger aufweist. Alternativ oder zusätzlich wird vorgeschlagen, dass das Kombiinstrument eine digitale Anzeigeeinrichtung mit mindestens einem Bildschirm aufweist, auf dem das Bild eines analogen Zeigerinstruments und/oder eine digitale Anzeige darstellbar ist. Die durch die analoge oder digitale Anzeigeeinrichtung angezeigten betriebsund/oder verkehrsbezogenen Informationen können eine aktuelle Geschwindigkeit des Kraftfahrzeugs, eine aktuelle Motordrehzahl, einen aktuellen Stand eines Kraftstofftanks, eine aktuelle Spannung einer Fahrzeugbatterie, einen aktuellen Ladedruck einer Motoraufladung, eine aktuelle Motoröltemperatur, einen aktuellen Motoröldruck, einen aktuellen Flüssigkeitsstand des Motoröls, eine aktuelle Außentemperatur und/oder eine aktuelle Kühlwassertemperatur umfassen.

Weitere Merkmale und Vorteile der vorliegenden Erfindung werden nachfolgend anhand der Figuren näher erläutert. Es zeigen:
- Figur 1: ein erfindungsgemäßes Kombiinstrument gemäß einer ersten bevorzugten Ausführungsform;
- Figur 2: ein erfindungsgemäßes Kombiinstrument gemäß einer zweiten bevorzugten Ausführungsform;
- Figur 3: ein erfindungsgemäßes Kombiinstrument gemäß einer dritten bevorzugten Ausführungsform;
- Figur 4: einen Schnitt entlang der Linie IV-IV durch das Kombiinstrument aus Figur 1; und
- Figur 5: mehrere nebeneinander angeordnete Kontrollleuchten eines erfindungsgemäßen Kombiinstruments im Ausschnitt.

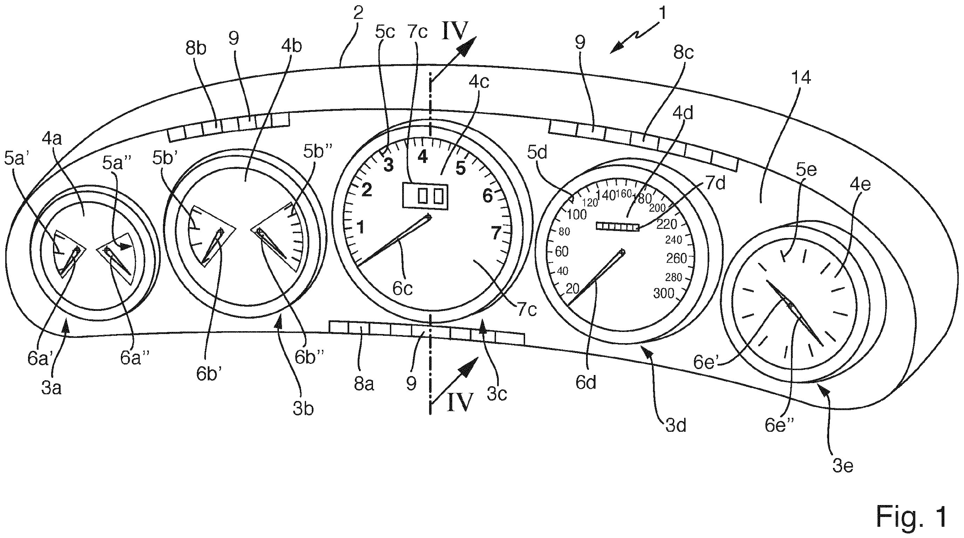

In Figur 1 ist ein erfindungsgemäßes Kombiinstrument in seiner Gesamtheit mit dem Bezugszeichen 1 bezeichnet. Es weist ein Gehäuse oder Tragelement 2 auf, in bzw. an dem mehrere Anzeigeeinrichtungen 3 befestigt sind. Das in Figur 1 beispielhaft gezeigte Kombiinstrument 1 umfasst fünf nebeneinander angeordnete analoge Anzeigeeinrichtungen 3a bis 3e (Zeigerinstrumente). Selbstverständlich kann das erfindungsgemäße Kombiinstrument 1 auch mehr oder weniger als die dargestellten fünf Zeigerinstrumente 3a bis 3e aufweisen. Ferner ist es denkbar, dass die Zeigerinstrumente 3a bis 3e nicht in der dargestellten Weise, sondern auf andere Weise nebeneinander und/oder übereinander und/oder versetzt zueinander in dem Kombiinstrument 1 angeordnet sind. Des Weiteren ist es denkbar, dass eines oder mehrere der analoge Anzeigeeinrichtungen 3a bis 3e durch eine digitale multifunktionale Anzeigeeinrichtung, beispielsweise in Form einer LCD- oder LED-Anzeige (sogenanntes Display), ersetzt ist.

Bei dem in Figur 1 gezeigten Ausführungsbeispiel des Kombiinstruments 1 weist das linke Zeigerinstrument 3a eine Anzeigefläche 4a auf, auf der links eine erste Skala 5a' beispielsweise für den Tankinhalt und rechts eine zweite Skala 5a" beispielsweise für die Batteriespannung angeordnet ist. Der ersten Skala 5a' ist ein erster Zeiger 6a' und der zweiten Skala 5a" ein zweiter Zeiger 6a" zugeordnet. In entsprechender Weise verfügt das daneben angeordnete Zeigerinstrument 3b über eine Anzeigefläche 4b, auf der links eine erste Skala 5b' beispielsweise für die Kühlwassertemperatur und rechts eine zweite Skala 5b" beispielsweise für den Öldruck aufgebracht ist. Der ersten Skala 5b' ist ein erster Zeiger 6b' und der zweiten Skala 5b" ein zweiter Zeiger 6b" zugeordnet. Ebenso weist das mittlere Zeigerinstrument 3c eine Anzeigefläche 4c auf, die mit einer Skala 5c beispielsweise für die aktuelle Motordrehzahl versehen ist. Der Skala 5c ist ein Zeiger 6c zugeordnet. Ferner ist auf der Anzeigefläche 4c eine LCD-, LED- oder beliebig andere digitale Anzeigeeinrichtung 7c integriert, auf der beispielsweise die aktuelle Fahrzeuggeschwindigkeit in digitaler Form (aktuell "0.0") angezeigt werden kann.

Das Zeigerinstrument 3d verfügt ebenfalls über eine Anzeigefläche 4d, auf der eine Skala 5d beispielsweise für die aktuelle Fahrzeuggeschwindigkeit angeordnet ist. Der Skala 5d ist ein Zeiger 6d zugeordnet. Ferner ist auf der Anzeigefläche 4d eine mechanische oder elektronische Anzeige 7d vorgesehen, um die zurückgelegte Fahrtstrecke anzuzeigen. Schließlich weist das rechte Zeigerinstrument 3e eine Anzeigefläche 4e auf, auf der eine Skala 5e beispielsweise für die aktuelle Uhrzeit ausgebildet ist. Der Skala 5e sind zwei Zeiger 6e' und 6e" zugeordnet, die zur Anzeige der aktuellen Stunden und Minuten vorgesehen sind.

Das Kombiinstrument 1 kann zusätzlich zu den Anzeigeeinrichtungen 3 mehrere neben- oder übereinander oder versetzt zueinander angeordnete Kontrollleuchten 8 aufweisen. Die Kontrollleuchten 8 können an einer beliebigen Stelle auf der dem Fahrer des Kraftfahrzeugs, in den das Kombiinstrument 1 eingebaut ist, zugewandten vorderen Anzeigeseite 14 des Kombiinstruments 1 angeordnet sein. In dem Beispiel der Figur 1 sind Kontrollleuchten 8a entlang eines unteren Rands des Kombiinstruments 1 angeordnet. Insbesondere sind die Kontrollleuchten 8a unterhalb der mittleren Anzeigeeinrichtung 3c bzw. zwischen einem unteren Rand der mittleren Anzeigeeinrichtung 3c und einem unteren Rand des Kombiinstruments 1 angeordnet. Weitere Kontrollleuchten 8b und 8c sind entlang des oberen Rands des Kombiinstruments 1 angeordnet. Die Kontrollleuchten 8b sind oberhalb der Anzeigeeinrichtung 3b bzw. zwischen einem oberen Rand der Anzeigeeinrichtung 3b und einem oberen Rand des Kombiinstruments 1 angeordnet. Die Kontrollleuchten 8c sind oberhalb der Anzeigeeinrichtung 3d bzw. zwischen einem oberen Rand der Anzeigeeinrichtung 3d und einem oberen Rand des Kombiinstruments 1 angeordnet.

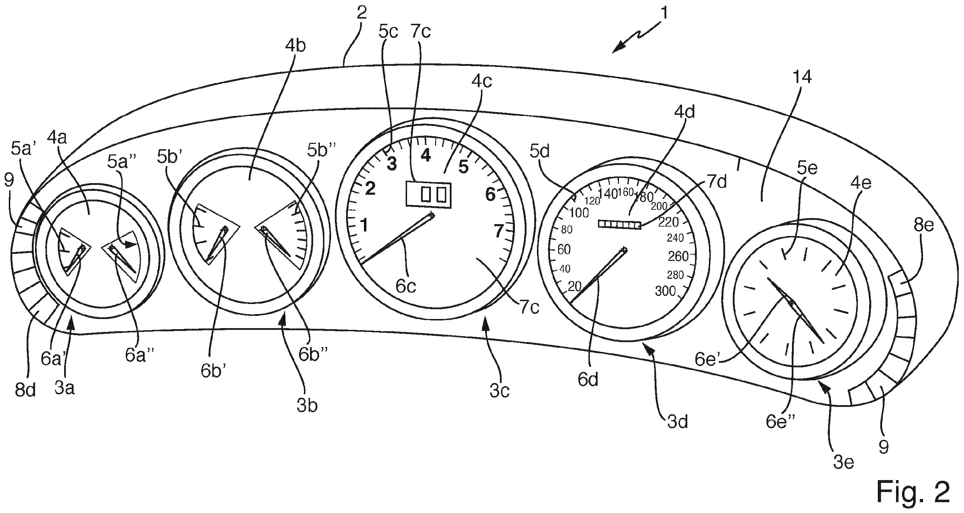

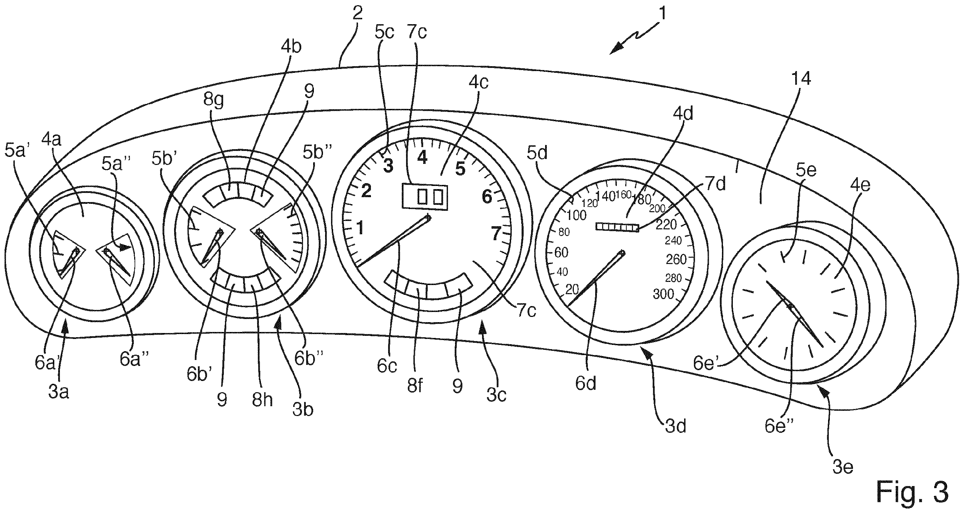

In dem Ausführungsbeispiel der Figur 2 sind Kontrollleuchten 8d und 8e entlang eines seitlichen Rands des Kombiinstruments 1 angeordnet. Die Kontrollleuchten 8d sind links von der linken Anzeigeeinrichtung 3a bzw. zwischen einem linken Rand der Anzeigeeinrichtung 3a und einem linken Rand des Kombiinstruments 1 angeordnet. Die Kontrollleuchten 8e sind rechts von der rechten Anzeigeeinrichtung 3e bzw. zwischen einem rechten Rand der Anzeigeeinrichtung 3e und einem rechten Rand des Kombiinstruments 1 angeordnet. In dem Beispiel der Figur 3 sind Kontrollleuchten 8f, 8g und 8h in die Anzeigeflächen 4b und 4c der Anzeigeeinrichtungen 3b und 3c integriert. Die Kontrollleuchten 8f sind bogenförmig entlang eines unteren Rands der Anzeigeeinrichtung 3c angeordnet. Die Kontrollleuchten 8g sind bogenförmig entlang eines oberen Rands der Anzeigeeinrichtung 3b angeordnet. Die Kontrollleuchten 8h sind bogenförmig entlang eines unteren Rands der Anzeigeeinrichtung 3b angeordnet. Selbstverständlich können die Kontrollleuchten 8f, 8g und 8h nicht bogenförmig, sondern in anderer Weise, beispielsweise auf einer Geraden, nebeneinander oder in beliebig anderer Weise gruppiert (zum Beispiel übereinander oder versetzt zueinander) angeordnet sein. Ferner können die Kontrollleuchten 8f, 8g und 8h auch in den Anzeigeflächen 4 von anderen Anzeigeeinrichtungen 3 angeordnet sein.

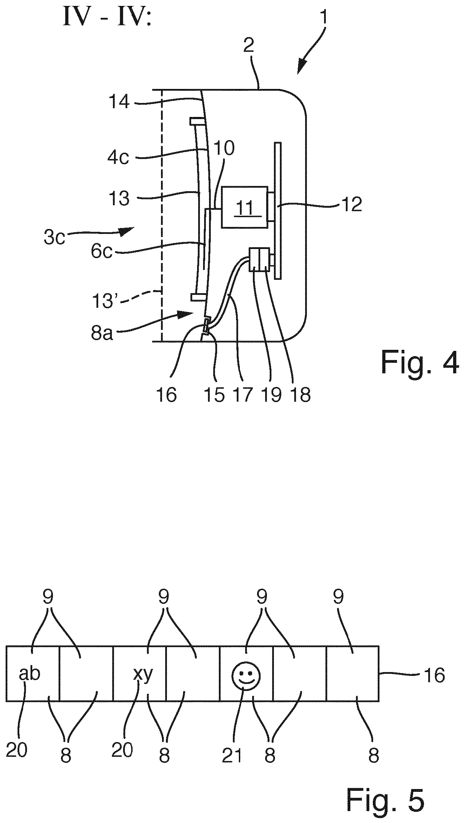

Gemäß der vorliegenden Erfindung sind neben- oder übereinander oder versetzt zueinander angeordnete Kontrollleuchten 8 durch einen einzigen OLED-Streifen 16 (vgl. Figuren 4 und 5) gebildet, wobei der OLED-Streifen in mehrere separat ansteuerbare Leuchtsegmente 9 unterteilt ist und jedes Leuchtsegment 9 eine Kontrollleuchte 8 bildet. Der OLED-Streifen 16 ist vorzugsweise als eine im unmontierten Zustand flexible OLED-Folie ausgebildet. Eine derart ausgestaltete Kontrollleuchte 8 hat gegenüber herkömmlichen Kontrollleuchten bzw. herkömmlichen Kombiinstrumenten die folgenden Vorteile:
- Die Teileanzahl wird reduziert, wobei insbesondere auf Leiterplatten zur Befestigung von Glühbirnen oder LEDs, Optiken zum Bündeln des von den Glühbirnen oder LEDs ausgesandten Lichts sowie lichtdurchlässige, eingefärbte und mit Symbolen oder Piktogrammen versehene Abdeckungen verzichtet werden kann, welche den für den Fahrer des Kraftfahrzeugs sichtbaren Teil der Kontrollleuchten bilden.
- Der für die Kontrollleuchten erforderliche Bauraum in dem Kombiinstrument wird reduziert, wobei die erfindungsgemäßen Kontrollleuchten 8 insbesondere eine geringe Tiefe aufweisen, da die Leuchtsegmente 9 der OLED-Streifen homogen leuchtende Flächen bilden, welche die Glühbirnen oder LEDs, die Optiken und die transparenten Abdeckungen herkömmlicher Kontrollleuchten ersetzen.
- Die Montage der Kontrollleuchten 8 in dem Kombiinstrument 1 wird einfacher und schneller und damit auch kostengünstiger, da lediglich vorgefertigte OLED-Streifen auf einem geeigneten Trägerbereich des Kombiinstruments 1 angeordnet, befestigt und elektrisch kontaktiert werden müssen. Eine Ausrichtung der Glühbirnen oder LEDs, der Optiken und der transparenten Abdeckungen relativ zueinander kann entfallen. Auch das bisher erforderliche Zusammensetzen der Einzelteile kann entfallen. Zudem können die OLED-Streifen auf nahezu beliebigen Trägerbereichen frei und flexibel im Kombiinstrument 1 angeordnet und befestigt werden. Falls eine Leiterplatte zur Kontaktierung der OLED-Streifen verwendet wird, kann diese ebenfalls frei im Kombiinstrument 1 positioniert werden, wobei eine Kontaktierung des OLES-Streifens mit der Leiterplatte über flexible Leitungen erfolgen kann.

In Figur 4 ist ein Vertikalschnitt entlang der Linie IV-IV durch das Kombiinstrument 1 aus Figur 1 gezeigt. Es ist zu erkennen, dass der Zeiger 6c an einer Welle 10 befestigt ist, die durch einen Elektromotor 11, der vorzugsweise als ein Schrittmotor ausgebildet ist, angetrieben und in eine Drehbewegung versetzt wird, um den Zeiger 6c in Abhängigkeit von der aktuellen Motordrehzahl zu bewegen und in die entsprechende Drehstellung zu bringen. Der Elektromotor 11 ist auf einer Leiterplatte 12 befestigt und über diese elektrisch kontaktiert. Die Leiterplatte 12 ist in dem Gehäuse oder Tragelement 2 des Kombiinstruments 1 angeordnet und befestigt. Über nicht dargestellte elektrische Kontakte ist das Kombiinstrument 1 mit der elektrischen Energieversorgung des Kraftfahrzeugs, insbesondere einer Kraftfahrzeugbatterie, sowie mit einer Steuereinheit (ECU) verbunden. Die Anzeigeeinrichtung 3c ist nach vorne hin durch eine transparente Abdeckscheibe 13 verschlossen, um die Anzeigeeinrichtung 3c bzw. den Zeiger 6c vor mechanischen, chemischen und/oder atmosphärischen Beeinträchtigungen zu schützen. Die Abdeckscheibe 13 kann aus Glas oder Kunststoff bestehen. Alternativ oder zusätzlich kann eine transparente Abdeckscheibe 13' (gestrichelt gezeichnet) auch weiter vorne an dem Gehäuse 2 des Kombiinstruments 1 angeordnet und befestigt sein, sodass sie sich über die gesamte Breite des Kombiinstruments 1 erstreckt (vergleiche die Figuren 1-3) und alle Anzeigeeinrichtungen 3a bis 3e abdeckt.

Der OLED-Streifen 16 ist auf einem Trägerbereich 15 im Inneren des Kombiinstruments 1 befestigt. In dem gezeigten Beispiel wird der Trägerbereich 15 durch eine sich in die Zeichenebene hinein erstreckende längliche Vertiefung gebildet, die in einem Bereich unterhalb der Anzeigeeinrichtung 3c in einer die Anzeigeseite 14 des Kombiinstruments 1 bildenden vorderen Wand des Gehäuses 2 ausgebildet ist. Die Vertiefung 15 entspricht vorzugsweise in Form und Abmessungen der Form und den Abmessungen des OLED-Streifens 16, der die Kontrollleuchten 8a bildet. Zur Befestigung des OLED-Streifens 16 kann dieser beispielsweise in der Vertiefung 15 verklebt sein. Zu diesem Zweck kann er auf seiner Rückseite eine selbstklebende Beschichtung aufweisen. Andere Arten der Befestigung sind ebenfalls denkbar. Elektrische Anschlussleitungen 17 des OLED-Streifens 16 können hinten durch eine Öffnung aus der Vertiefung 15 herausgeführt sein. Alternativ kann die Vertiefung 15 auch einfach als ein Stützrahmen für den OLED-Streifen 16 ausgebildet sein, sodass das Herausführen der Anschlussleitungen 17 durch das zentrale Loch des Rahmens problemlos möglich ist. Die Anschlussleitungen 17 dienen zur Versorgung des OLED-Streifens 16 mit elektrischer Energie und/oder zur Ansteuerung der einzelnen Leuchtsegmente 9 des OLED-Streifens 16. In dem gezeigten Beispiel sind die Anschlussleitungen 17 mit der Leiterplatte 12 des Elektromotors 11 kontaktiert. Dabei kann auf der Leiterplatte 12 ein Buchsenelement 18 angeordnet und elektrisch kontaktiert sein, in das ein entsprechendes, am distalen Ende der Anschlussleitungen 17 angeordnetes Steckerelement 19 eingesteckt ist. Zur elektrischen Kontaktierung des OLED-Streifens 16 wird also die sowieso in dem Kombiinstrument 1 vorgesehene Leiterplatte 12 des Elektromotors 11 verwendet, eine separate Leiterplatte zur Befestigung und/oder Kontaktierung des OLED-Streifens 16 ist nicht erforderlich.

Selbstverständlich kann der OLED-Streifen 16 auch ohne eine Vertiefung 15 an einer beliebig anderen Stelle auf der die Anzeigeseite 14 des Kombiinstruments 1 bildenden vorderen Wand des Gehäuses 2 angeordnet und befestigt sein (vergleiche die Kontrollleuchten 8b, 8c in Figur 1 sowie die Kontrollleuchten 8d, 8e in Figur 2). Ebenso kann der OLED-Streifen 16 an einer beliebigen Stelle auf der Anzeigefläche 4 einer der Anzeigeeinrichtungen 3 angeordnet und befestigt sein (vergleiche die Kontrollleuchten 8f bis 8h in Figur 3).

In Figur 5 sind mehrere nebeneinander angeordnete Kontrollleuchten 8 im Ausschnitt gezeigt. Die Kontrollleuchten 8 sind durch den einen OLED-Streifen 16 gebildet, wobei die Leuchtsegmente 9 des OLED-Streifens 16 jeweils einer Kontrollleuchte 8 entsprechen. Mindestens eines der Leuchtsegmente 9 weist ein Symbol 20 und/oder ein Piktogramm 21 auf. Vorzugsweise repräsentiert das Symbol 20 und/oder das Piktogramm 21 eine Funktion oder einen Parameter des Kraftfahrzeugs, zu dem die Kontrollleuchte 8 einen Betriebszustand oder eine Gefahrensituation ausgibt. Das Symbol 20 und/oder das Piktogramm 21 kann bei aktiviertem Leuchtsegment 9 nicht leuchten (d.h. dunkel bleiben), während der restliche Bereich des Leuchtsegments 9 außerhalb des Symbols 20 und/oder Piktogramms 21 bei aktiviertem Leuchtsegment 9 leuchtet. Alternativ wäre es auch denkbar, dass nur das Symbol 20 und/oder das Piktogramm 21 bei aktiviertem Leuchtsegment 9 leuchtet, während der restliche Bereich des Leuchtsegments 9 außerhalb des Symbols 20 und/oder Piktogramms 21 bei aktiviertem Leuchtsegment 9 nicht leuchtet (d.h. dunkel bleibt).

## Patentansprüche

1. Kombiinstrument (1) eines Kraftfahrzeugs, umfassend mindestens eine analoge oder digitale Anzeigeeinrichtung (3) zur Anzeige von betriebs- und/oder verkehrsbezogenen Informationen betreffend das Kraftfahrzeug bzw. sein Umfeld, sowie mehrere neben- oder übereinander angeordnete Kontrollleuchten (8),
**dadurch gekennzeichnet, dass**
die neben- oder übereinander angeordneten Kontrollleuchten (8a; 8b; 8c; 8d; 8e; 8f; 8g; 8h) durch einen einzigen OLED-Streifen (16) gebildet sind, wobei der OLED-Streifen (16) in mehrere separat ansteuerbare Leuchtsegmente (9) unterteilt ist, wobei jedes Leuchtsegment (9) eine der Kontrollleuchten (8a; 8b; 8c; 8d; 8e; 8f; 8g; 8h) bildet.

2. Kombiinstrument (1) nach Anspruch 1, **dadurch gekennzeichnet, dass** die Kontrollleuchten (8a; 8b; 8c; 8d; 8e; 8f; 8g; 8h) am Rand des Kombiinstruments (1) oberhalb, unterhalb oder seitlich neben der mindestens einen Anzeigeeinrichtung (3) angeordnet sind.

3. Kombiinstrument (1) nach Anspruch 1 oder 2, **dadurch gekennzeichnet, dass** die Kontrollleuchten (8a; 8b; 8c; 8d; 8e; 8f; 8g; 8h) zur Anzeige eines Betriebszustands des Kraftfahrzeugs und/oder einer Gefahrensituation des Kraftfahrzeugs dient.

4. Kombiinstrument (1) nach Anspruch 3, **dadurch gekennzeichnet, dass** der durch die Kontrollleuchten (8a; 8b; 8c; 8d; 8e; 8f; 8g; 8h) angezeigte Betriebszustand des Kraftfahrzeugs ein eingeschaltetes Abblendlicht, ein eingeschaltetes Fernlicht, einen eingeschalteten Nebelscheinwerfer, ein eingeschaltetes Nebelschlusslicht, einen eingeschalteten Fahrtrichtungsanzeiger, ein ausgeschaltetes Fahrdynamiksystem, einen nicht angelegten Sicherheitsgurt, einen abgeschalteten Beifahrerairbag und/oder einen eingeschalteten Abstandsregelungstempomat umfasst.

5. Kombiinstrument (1) nach Anspruch 3 oder 4, **dadurch gekennzeichnet, dass** die durch die Kontrollleuchten (8a; 8b; 8c; 8d; 8e; 8f; 8g; 8h) angezeigte Gefahrensituation des Kraftfahrzeugs eine zu hohe Kühlwassertemperatur, einen zu niedrigen Füllstand des Kraftstoffs, des Öls, des Kühlwassers, der Bremsflüssigkeit und/oder der Scheibenreinigungsflüssigkeit, durchdrehende Antriebsräder, ein aktuell eingreifendes oder ausgefallenes Antiblockiersystem, eine aktuell eingreifende oder ausgefallene Fahrdynamikregelung, einen ausgefallenen Abstandsregelungstempomat, eine ausgefallene adaptive Scheinwerfersteuerung, eine ausgefallene Servounterstützung für Bremsen oder Lenkung, einen nicht angelegten Sicherheitsgurt, eine geöffnete Türe und/oder einen zu niedrigen Reifenluftdruck umfasst.

6. Kombiinstrument (1) nach einem der Ansprüche 1 bis 5, **dadurch gekennzeichnet, dass** der OLED-Streifen (16) als eine im unmontierten Zustand flexible OLED-Folie ausgebildet ist.

7. Kombiinstrument (1) nach Anspruch 6, **dadurch gekennzeichnet, dass** die OLED-Folie (16) derart auf einem Trägerbereich (15) im Inneren des Kombiinstruments (1) befestigt ist, dass das durch die aktivierten Leuchtsegmente (9) abgestrahlte Licht für den Fahrer des Kraftfahrzeugs sichtbar ist.

8. Kombiinstrument (1) nach einem der Ansprüche 1 bis 7, **dadurch gekennzeichnet, dass** jedes der Leuchtsegmente (9) des OLED-Streifens (16) nur als ganzes ansteuerbar ist und jeweils nur in einer Farbe leuchtet.

9. Kombiinstrument (1) nach Anspruch 8, **dadurch gekennzeichnet, dass** mindestens eines der Leuchtsegmente (9) derart ansteuerbar ist, dass es in mindestens zwei unterschiedlichen Farben leuchten kann.

10. Kombiinstrument (1) nach einem der Ansprüche 1 bis 9, **dadurch gekennzeichnet, dass** mindestens eines der Leuchtsegmente (9) ein Symbol (20) und/oder Piktogramm (21) aufweist, das bei aktiviertem Leuchtsegment (9) nicht leuchtet, wobei der restliche Bereich des Leuchtsegments (9) außerhalb des Symbols (20) und Piktogramms (21) bei aktiviertem Leuchtsegment (9) leuchtet.

11. Kombiinstrument (1) nach einem der Ansprüche 1 bis 10, **dadurch gekennzeichnet, dass** mindestens eines der Leuchtsegmente (9) ein Symbol (20) und/oder Piktogramm (21) aufweist, das bei aktiviertem Leuchtsegment (9) leuchtet, wobei der restliche Bereich des Leuchtsegments (9) außerhalb des Symbols (20) und Piktogramms (21) bei aktiviertem Leuchtsegment (9) nicht leuchtet.

12. Kombiinstrument (1) nach einem der Ansprüche 1 bis 11, **dadurch gekennzeichnet, dass** das Kombiinstrument (1) eine analoge Anzeigeeinrichtung (3) mit einem elektrischen Zeigerinstrument umfasst, die mindestens einen durch einen Elektromotor (11) angetriebenen Zeiger (6) aufweist.

13. Kombiinstrument (1) nach einem der Ansprüche 1 bis 12, **dadurch gekennzeichnet, dass** das Kombiinstrument (1) eine digitale Anzeigeeinrichtung (3) mit mindestens einem Bildschirm aufweist, auf dem ein analoges Zeigerinstrument und/oder eine digitale Anzeige darstellbar ist.

14. Kombiinstrument (1) nach einem der Ansprüche 1 bis 13, **dadurch gekennzeichnet, dass** die durch die analoge oder digitale Anzeigeeinrichtung (3) angezeigten betriebs- und/oder verkehrsbezogenen Informationen eine aktuelle Geschwindigkeit des Kraftfahrzeugs, eine aktuelle Motordrehzahl, einen aktuellen Stand eines Kraftstofftanks, eine aktuelle Spannung einer Fahrzeugbatterie, einen aktuellen Ladedruck einer Motoraufladung, eine aktuelle Motoröltemperatur, einen aktuellen Motoröldruck, eine aktuelle Außentemperatur und/oder eine aktuelle Kühlwassertemperatur umfassen.

## Claims

1. Instrument cluster (1) of a motor vehicle, comprising at least one analogue or digital display device (3) for displaying operation-related and/or traffic-related information relating to the motor vehicle or its environment, and a plurality of control lights (8) arranged next to or above one another,
**characterized in that**
the control lights (8a; 8b; 8c; 8d; 8e; 8f; 8g; 8h) arranged next to or above one another are formed by a single OLED strip (16), the OLED strip (16) being subdivided into a plurality of separately controllable illumination segments (9), each illumination segment (9) forming one of the control lights (8a; 8b; 8c; 8d; 8e; 8f; 8g; 8h).

2. Instrument cluster (1) according to claim 1, **characterized in that** the control lights (8a; 8b; 8c; 8d; 8e; 8f; 8g; 8h) are arranged at the edge of the instrument cluster (1) above, below or to the side of the at least one display device (3).

3. Instrument cluster (1) according to claim 1 or 2, **characterized in that** the control lights (8a; 8b; 8c; 8d; 8e; 8f; 8g; 8h) serve to indicate an operating state of the motor vehicle and/or a hazardous situation of the motor vehicle.

4. Instrument cluster (1) according to claim 3, **characterized in that** the operating state of the motor vehicle indicated by the control lights (8a; 8b; 8c; 8d; 8e; 8f; 8g; 8h) comprises a switched-on low beam, a switched-on high beam, a switched-on fog light, a switched-on rear fog lamp, a switched-on direction indicator, a switched-off driving dynamics system, an unbuckled seat belt, a switched-off passenger airbag and/or a switched-on adaptive cruise control.

5. Instrument cluster (1) according to claim 3 or 4, **characterized in that** the hazardous situation indicated by the control lights (8a; 8b; 8c; 8d; 8e; 8f; 8g; 8h) indicates an excessively high coolant temperature, an excessively low level of fuel, oil, coolant, brake fluid and/or windscreen washer fluid, spinning drive wheels, a currently active or failed anti-lock braking system, a currently active or failed stability control system, a failed adaptive cruise control, a failed adaptive headlamp control, a failed power-assisted braking or steering system, an unbuckled seat belt, an open door and/or underinflated tyres.

6. Instrument cluster (1) according to one of claims 1 to 5, **characterized in that** the OLED strip (16) is formed as an OLED film which is flexible in the unmounted state.

7. Instrument cluster (1) according to claim 6, **characterized in that** the OLED film (16) is fixed to a support region (15) in the interior of the instrument cluster (1) in such a way that the light emitted by the activated illumination segments (9) is visible to the driver of the motor vehicle.

8. Instrument cluster (1) according to one of claims 1 to 7, **characterized in that** each of the illumination segments (9) of the OLED strip (16) can only be activated as a whole and only lights up in one colour in each case.

9. Instrument cluster (1) according to claim 8, **characterized in that** at least one of the illumination segments (9) can be controlled in such a way that it can light up in at least two different colours.

10. Instrument cluster (1) according to one of the claims 1 to 9, **characterized in that** at least one of the illumination segments (9) comprises a symbol (20) and/or pictogram (21) which does not light up when the illumination segment (9) is activated, wherein the remaining area of the illumination segment (9) outside the symbol (20) and pictogram (21) lighting up when the illumination segment (9) is activated.

11. Instrument cluster (1) according to one of the claims 1 to 10, **characterized in that** at least one of the illumination segments (9) comprises a symbol (20) and/or pictogram (21) which lights up when the illumination segment (9) is activated, wherein the remaining area of the illumination segment (9) outside the symbol (20) and pictogram (21) does not light up when the illumination segment (9) is activated.

12. Instrument cluster (1) according to any one of claims 1 to 11, **characterized in that** the instrument cluster (1) comprises an analogue display device (3) with an electric pointer instrument which has at least one pointer (6) driven by an electric motor (11).

13. Instrument cluster (1) according to any one of claims 1 to 12, **characterized in that** the instrument cluster (1) comprises a digital display device (3) with at least one screen on which an analogue pointer instrument and/or a digital display can be displayed.

14. Instrument cluster (1) according to one of claims 1 to 13, **characterized in that** the operation-related and/or traffic-related information displayed by the analogue or digital display device (3) comprises a current speed of the motor vehicle, a current rotational speed of the motor, a current level of a fuel tank, a current voltage of a vehicle battery, a current boost pressure of an engine supercharger, a current engine oil temperature, a current engine oil pressure, a current outside temperature and/or a current cooling water temperature.

## Revendications

1. Combiné d'instruments (1) d'un véhicule automobile, comprenant au moins un dispositif d'affichage (3) analogique ou numérique pour l'affichage d'informations relatives au fonctionnement et/ou au trafic concernant le véhicule automobile ou son environnement, ainsi que plusieurs voyants de contrôle (8) disposés les uns à côté des autres ou les uns au-dessus des autres,
**caractérisé en ce que**
les voyants de contrôle (8a ; 8b ; 8c ; 8d ; 8e ; 8f ; 8g ; 8h) disposés les uns à côté des autres ou les uns au-dessus des autres sont formés par une seule bande OLED (16), la bande OLED (16) étant divisée en plusieurs segments lumineux (9) pouvant être commandés séparément, chaque segment lumineux (9) formant l'un des voyants de contrôle (8a ; 8b ; 8c ; 8d ; 8e ; 8f ; 8g ; 8h).

2. Combiné d'instruments (1) selon la revendication 1, **caractérisé en ce que** les voyants de contrôle (8a ; 8b ; 8c ; 8d ; 8e ; 8f ; 8g ; 8h) sont disposés sur le bord du combiné d'instruments (1), au-dessus, au-dessous ou latéralement à côté d'au moins un dispositif d'affichage (3).

3. Combiné d'instruments (1) selon la revendication 1 ou 2, **caractérisé en ce que** les voyants de contrôle (8a ; 8b ; 8c ; 8d ; 8e ; 8f ; 8g ; 8h) servent à indiquer un état de fonctionnement du véhicule automobile et/ou une situation de danger du véhicule automobile.

4. Combiné d'instruments (1) selon la revendication 3, **caractérisé en ce que** l'état de fonctionnement du véhicule automobile indiqué par les voyants de contrôle (8a ; 8b ; 8c ; 8d ; 8e ; 8f ; 8g ; 8h) comprend un feu de croisement allumé, un feu de route allumé, un feu de brouillard allumé, un feu de brouillard arrière allumé, un indicateur de direction allumé, un système dynamique de conduite éteint, une ceinture de sécurité non bouclée, un airbag passager éteint et/ou un régulateur de vitesse et de distance allumé.

5. Combiné d'instruments (1) selon la revendication 3 ou 4, **caractérisé en ce que** le situation de danger du véhicule automobile indiqué par les voyants de contrôle (8a ; 8b ; 8c ; 8d ; 8e ; 8f ; 8g ; 8h) comprend une température trop élevée de l'eau de refroidissement, un niveau trop bas du carburant, de l'huile, de l'eau de refroidissement, du liquide de frein et/ou du liquide de nettoyage des vitres, des roues motrices qui patinent, un système antiblocage actuellement engagé ou défaillant, un système de contrôle dynamique du véhicule en cours d'utilisation ou défaillant, un régulateur de vitesse et de distance défaillant, un système de commande adaptative des phares défaillant, une assistance au freinage ou à la direction défaillante, une ceinture de sécurité non bouclée, une porte ouverte et/ou une pression de gonflage des pneumatiques trop basse.

6. Combiné d'instruments (1) selon l'une des revendications 1 à 5, **caractérisé en ce que** la bande OLED (16) est conçue comme une feuille OLED flexible à l'état non monté.

7. Combiné d'instruments (1) selon la revendication 6, **caractérisé en ce que** la feuille OLED (16) est fixée sur une zone de support (15) à l'intérieur du combiné d'instruments (1) de telle sorte que la lumière émise par les segments lumineux (9) activés est visible pour le conducteur du véhicule automobile.

8. Combiné d'instruments (1) selon l'une des revendications 1 à 7, **caractérisé en ce que** chacun des segments lumineux (9) de la bande OLED (16) ne peut être commandé que dans son ensemble et n'éclaire respectivement que dans une seule couleur.

9. Combiné d'instruments (1) selon la revendication 8, **caractérisé en ce qu'**au moins un des segments lumineux (9) peut être commandé de telle sorte qu'il peut s'allumer dans au moins deux couleurs différentes.

10. Combiné d'instruments (1) selon l'une des revendications 1 à 9, **caractérisé en ce qu'**au moins l'un des segments lumineux (9) présente un symbole (20) et/ou un pictogramme (21) qui ne s'allume pas lorsque le segment lumineux (9) est activé, la zone restante du segment lumineux (9) en dehors du symbole (20) et du pictogramme (21) s'allumant lorsque le segment lumineux (9) est activé.

11. Combiné d'instruments (1) selon l'une des revendications 1 à 10, **caractérisé en ce qu'**au moins l'un des segments lumineux (9) présente un symbole (20) et/ou un pictogramme (21) qui s'allume lorsque le segment lumineux (9) est activé, la zone restante du segment lumineux (9) en dehors du symbole (20) et du pictogramme (21) ne s'allumant pas lorsque le segment lumineux (9) est activé.

12. Combiné d'instruments (1) selon l'une des revendications 1 à 11, **caractérisé en ce que** le combiné d'instruments (1) comprend un dispositif d'affichage analogique (3) avec un instrument à aiguille électrique, qui présente au moins une aiguille (6) entraînée par un moteur électrique (11).

13. Combiné d'instruments (1) selon l'une des revendications 1 à 12, **caractérisé en ce que** le combiné d'instruments (1) comporte un dispositif d'affichage numérique (3) avec au moins un écran sur lequel peut être représenté un instrument à aiguille analogique et/ou un affichage numérique.

14. Combiné d'instruments (1) selon l'une des revendications 1 à 13, **caractérisé en ce que** les informations relatives au fonctionnement et/ou au trafic affichées par le dispositif d'affichage (3) analogique ou numérique comprennent une vitesse actuelle du véhicule automobile, un régime moteur actuel, un niveau actuel d'un réservoir de carburant, une tension actuelle d'une batterie de véhicule, une pression de suralimentation actuelle d'une suralimentation du moteur, une température d'huile moteur actuelle, une pression d'huile moteur actuelle, une température extérieure actuelle et/ou une température d'eau de refroidissement actuelle.
